# EUROPEAN PATENT APPLICATION

(11) **EP 4 808 054 A1**
(43) Date of publication of application: **16.09.2026**
(21) Application number: 25742127.1
(22) Date of filing: 09.01.2025
(51) Int. Cl.: H04L 25/02, H04B 7/0456, H04B 17/336, H04L 25/03

(54) **APPARATUS, METHOD, AND STORAGE MEDIUM FOR ANALYZING CHANNEL IN WIRELESS COMMUNICATION SYSTEM**

(30) Priority: 19.01.2024 KR 20240008655; 08.02.2024 KR 20240019612
(71) Applicant: Samsung Electronics Co., Ltd., Suwon-si, Gyeonggi-do 16677 (KR)
(72) Inventor: KIM, Jonghwan, Suwon-si Gyeonggi-do 16677 (KR); SHIM, Seijoon, Suwon-si Gyeonggi-do 16677 (KR)
(74) Representative: Gulde & Partner
(86) International application number: PCT/KR2025/000544
(87) International publication number: WO 2025/155032

(57) **Abstract**

This electronic device may comprise: at least one processor; and a memory that stores instructions. The instructions, when executed individually or collectively by the at least one processor, may instruct the electronic device to: generate first modified covariance information by generating covariance information of a channel for reception antennas on the basis of channel estimation using a reference signal obtained from another electronic device and setting, as a reference value, each of covariance components of the covariance information corresponding to a first component group determined on the basis of the magnitude of a covariance component from among component groups indicating correlation between the reception antennas; generate second modified covariance information by setting, as the reference value, each of covariance components of the first modified covariance information corresponding to a second component group different from the first component group from among the component groups; and transmit a signal to the other electronic device according to precoding information determined by using the second modified covariance information.

## Description

### [Technical Field]

The present disclosure relates to a wireless communication system, and more particularly, relates to a device, a method, and a storage medium for analyzing a channel.

### [Background Art]

In order to increase transmission and reception performance of a signal, a plurality of antenna elements may be used. For example, a technology used by the plurality of antenna elements may include a single-input multiple-output (SIMO) technology, a multiple-input single-output (MISO) technology, and a multiple-input multiple-output (MIMO) technology. A channel capacity of a wireless communication system using the technology using the plurality of antenna elements may be significantly improved compared with a single antenna technology.

The above-described information may be provided as a related art for the purpose of helping understanding of the present disclosure. No argument or decision is made as to whether any of the above description may be applied as a prior art related to the present disclosure.

### [Disclosure]

### [Technical Solution]

An electronic device may comprise at least one processor comprising processing circuitry. The electronic device may comprise memory, including one or more storage mediums, storing instructions. The instructions, when executed by the at least one processor individually or collectively, may cause the electronic device to generate covariance information of a channel for reception antennas, based on channel estimation using a reference signal obtained from another electronic device. The instructions, when executed by the at least one processor individually or collectively, may cause the electronic device to, by configuring each of covariance components of the covariance information, corresponding to a first component group determined based on a magnitude of a covariance component from among component groups representing correlation between the reception antennas, to a reference value, generate first modified covariance information. The instructions, when executed by the at least one processor individually or collectively, may cause the electronic device to, by configuring each of covariance components of the first modified covariance information, corresponding to a second component group different from the first component group from among the component groups, to the reference value, generate second modified covariance information. The instructions, when executed by the at least one processor individually or collectively, may cause the electronic device to transmit, to the another electronic device, a signal according to precoding information determined using the second modified covariance information.

A method performed by an electronic device may comprise generating covariance information of a channel for reception antennas, based on channel estimation using a reference signal obtained from another electronic device. The method may comprise, by configuring each of covariance components of the covariance information, corresponding to a first component group determined based on a magnitude of a covariance component from among component groups representing correlation between the reception antennas, to a reference value, generating first modified covariance information. The method may comprise, by configuring each of covariance components of the first modified covariance information, corresponding to a second component group different from the first component group from among the component groups, to the reference value, generating second modified covariance information. The method may comprise transmitting, to the another electronic device, a signal according to precoding information determined using the second modified covariance information.

A computer-readable storage medium may store one or more programs storing instructions that, when executed by at least one processor of an electronic device individually or collectively, cause the electronic device to generate covariance information of a channel for reception antennas, based on channel estimation using a reference signal obtained from another electronic device. The computer-readable storage medium may store one or more programs storing instructions that, when executed by the at least one processor individually or collectively, cause the electronic device to, by configuring each of covariance components of the covariance information, corresponding to a first component group determined based on a magnitude of covariance component from among component groups representing correlation between the reception antennas, to a reference value, generate first modified covariance information. The computer-readable storage medium may store one or more programs storing instructions that, when executed by the at least one processor individually or collectively, cause the electronic device to, by configuring each of covariance components of the first modified covariance information, corresponding to a second component group different from the first component group from among the component groups, to the reference value, generate second modified covariance information. The computer-readable storage medium may store one or more programs storing instructions that, when executed by the at least one processor individually or collectively, cause the electronic device to transmit, to the another electronic device, a signal according to precoding information determined using the second modified covariance information.

### [Description of the Drawings]

FIG. 1 illustrates an example of a wireless communication system.
FIG. 2A illustrates an example of network entities according to a distributed deployment.
FIG. 2B illustrates an example of a function split of network entities.
FIG. 3 illustrates an example of a functional configuration of an electronic device.
FIG. 4 illustrates an example of a transmission/reception end of multiple input multiple output (MIMO).
FIG. 5 is a diagram illustrating an example of singular value decomposition (SVD) for channel information in MIMO.
FIG. 6A illustrates an example of an operation flow for a method in which an electronic device decomposes covariance information of a channel based on a component group.
FIG. 6B illustrates examples of component groups corresponding to covariance components in covariance information of a channel.
FIG. 6C illustrates an example of component groups for a covariance matrix of a channel.
FIG. 7A illustrates an example of an operation flow for a method in which an electronic device decomposes covariance information of a channel based on a sequence of covariance components.
FIG. 7B illustrates an example of covariance information of a channel decomposed according to a sequence of covariance components.
FIGS. 8A and 8B illustrate examples of graphs illustrating a mean square error (MSE) according to the number of transmission antennas.
FIG. 9 illustrates an example of an operation flow for a method in which an electronic device decomposes covariance information of a channel based on a component group and transmits data.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a packet, a message, a signal, information, or signaling), a term referring to a resource (e.g., a symbol, a slot, a subframe, a radio frame, a subcarrier, a resource element (RE), a resource block (RB), a bandwidth part (BWP), or an occasion), a term for a computation state (e.g., a step, an operation, or a procedure), a term referring to data (e.g., a packet, a message, a user stream, information, a bit, a symbol, or a codeword), a term referring to a channel, a term referring to network entities (e.g., a distributed unit (DU), a radio unit (RU), a central unit (CU), a CU-control plane (CP), a CU-user plane (UP), an open radio access network (O-RAN) DU (O-DU), an O-RAN RU (O-RU), an O-RAN CU (O-CU), an O-RAN CU-CP (O-CU-UP), and an O-RAN CU-CP (O-CU-CP)), a term referring to a component of a device, and the like used in the following descriptions are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes embodiments using terms used in some communication standards (e.g., 3rd Generation Partnership Project (3GPP)), these are only examples for explanation. The embodiments of the present disclosure may be applied to other communication and broadcast systems.

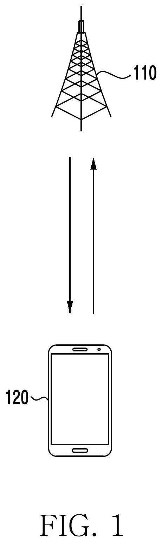

FIG. 1 illustrates a wireless communication system according to embodiments.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

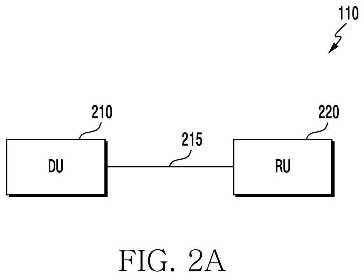

In a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which a digital unit (DU) and radio unit (RU) (or massive multiple input multiple output unit (MMU)) of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIG. 2A.

FIG. 2A illustrates an example of network entities according to a distributed deployment.

For example, the network entities may include a digital unit (DU) 210 and a radio unit (RU) 220 (or a massive multiple input multiple output (MMU) unit). For example, the network entities may be connected through a fronthaul. Unlike a backhaul between a base station and a core network, the fronthaul refers to a connection between entities (e.g., the DU 210 and the RU 220) between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, a base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used. According to an implementation example, in addition to a digital unit (DU), the DU 210 may be referred to as a baseband unit (BBU), a digital BBU, a baseband digital unit, a digital processing unit, digital processing circuitry, baseband processing circuitry, a baseband processing unit, and/or a technical term equivalent thereto. According to an implementation example, in addition to a radio unit (RU), the RU 220 may be referred to as a remote unit, a radio demote head (RRH), radio processing circuitry, a radio processing unit, an antenna integrated radio, an air radio device, an air scale communication device, a radio device, a radio communication device, and/or a technical term equivalent thereto. In addition, according to an implementation example, although a network entity connected to the DU 210 is described as the RU 220 in the present disclosure, of course, a massive multiple input multiple output (MMU) unit may be connected to the DU 210 and be used instead of the RU 220.

As communication technology has been developed, mobile data traffic increased, and thus the bandwidth demand required in a fronthaul between a digital unit and a radio unit has increased significantly. In a deployment such as centralized/cloud radio access network (C-RAN), the DU 210 may be implemented to perform functions for packet data convergence protocol (PDCP), radio link control (RLC), media access control (MAC), and physical (PHY), and the RU 220 may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. As a non-limiting example, a digital unit (DU) 210 may be implemented by being separated into a centralized unit (CU) and a distributed unit (DU). Between a core (e.g., 5G core (5GC) or next generation core (NGC)) network and a radio access network (RAN), the base station may be implemented in a structure in which a centralized unit (CU), a distributed unit (DU), and a radio unit (RU) are arranged in order. An interface between the centralized unit (CU) and the distributed unit (DU) may be referred to as an F1 interface.

A centralized unit (CU) may be in charge of functions of a higher layer than the distributed unit (DU), by being connected to one or more distributed units (DUs). For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

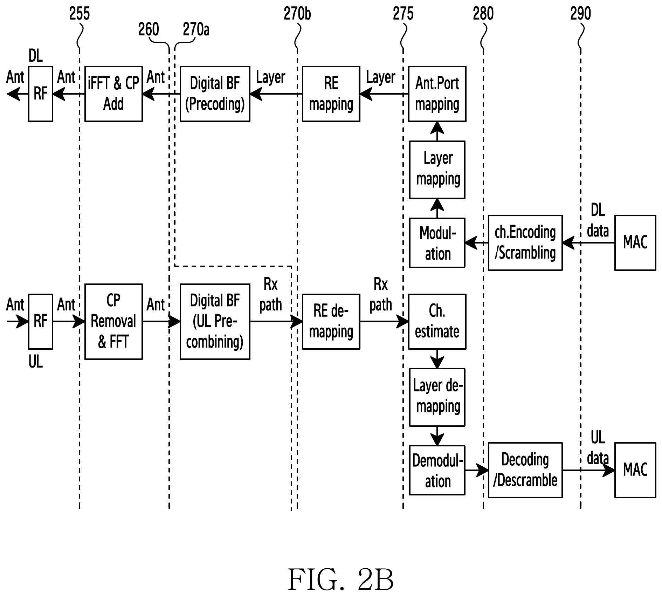

FIG. 2A illustrates an example of network entities according to a distributed deployment. The network entities of FIG. 2B may include the DU 210 and the RU 220 of FIG. 2A.

As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used. Hereinafter, although described as RU, the function split to be described later may be equally applied not only to RU but also to a relationship between MMU and DU.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 2B, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 255, the RU performs the RF function, and the DU performs the PHY function. The first function split is substantially such that the PHY function is not implemented within the RU, and as an example, it may be referred to as Option 8. In a second function split 260, the RU performs iFFT conversion/CP insertion in the DL of the PHY function and FFT conversion/CP removal in the UL, and the DU performs the remaining PHY functions. As an example, the second function split 260 may be referred to as Option 7-1. In a third function split 270a, the RU performs iFFT conversion/CP insertion in the DL of the PHY function and FFT conversion/CP removal and digital beamforming in the UL, and the DU performs the remaining PHY functions. As an example, the third function split 270a may be referred to as Option 7-2x Category A. In a fourth function split 270b, the RU performs digital beamforming in both DL and UL, and the DU performs upper PHY functions after digital beamforming. As an example, the fourth function split 270b may be referred to as Option 7-2x Category B. In a fifth function split 275, the RU performs RE mapping (or RE demapping) in both DL and UL, and the DU performs upper PHY functions after RE mapping (or RE demapping). As an example, the fifth function split 275 may be referred to as Option 7-2. In a sixth function split 280, the RU performs up to modulation (or demodulation) in both DL and UL, and the DU performs upper PHY functions after modulation (or demodulation). As an example, the sixth function split 280 may be referred to as Option 7-3. In a seventh function split 290, the RU performs up to encoding/scrambling (or decoding/discrambling) in both DL and UL, and the DU performs upper PHY functions after modulation (or demodulation). As an example, the seventh function split 290 may be referred to as option 6.

According to an embodiment, in a case that a large amount of signal processing is expected, such as in FR 1 MMU, a function split (e.g., the fourth function split 270b) in a relatively high layer may be required to reduce a fronthaul capacity. Additionally, in a function split (e.g., the sixth function split 280) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 270a or a lower function split (e.g., the second function split 260) may be applied. Conversely, in a case that there is a capability to process precoding of data received from the DU, the fourth function split 270b or a higher function split (e.g., the sixth function split 280) may be applied.

In the O-RAN standard, the type of O-RU is distinguished according to whether the precoding function is located at an interface of the O-DU or an interface of the O-RU. For example, the RU may perform operations according to a function split of the third function split 270a (which may be referred to as category A (CAT-A)), or the fourth function split 270b (which may be referred to as category B (CAT-B)) for performing beamforming processing. In other words, an O-RU in which precoding is not performed (i.e., low complexity) may be referred to as a CAT-A O-RU. An O-RU in which precoding is performed may be referred to as a CAT-B O-RU. In addition, for example, channel estimation may be performed in the O-RU instead of the O-DU. For improvement of uplink performance, the O-RU may also operate according to the sixth function split 280 (Option 7-3).

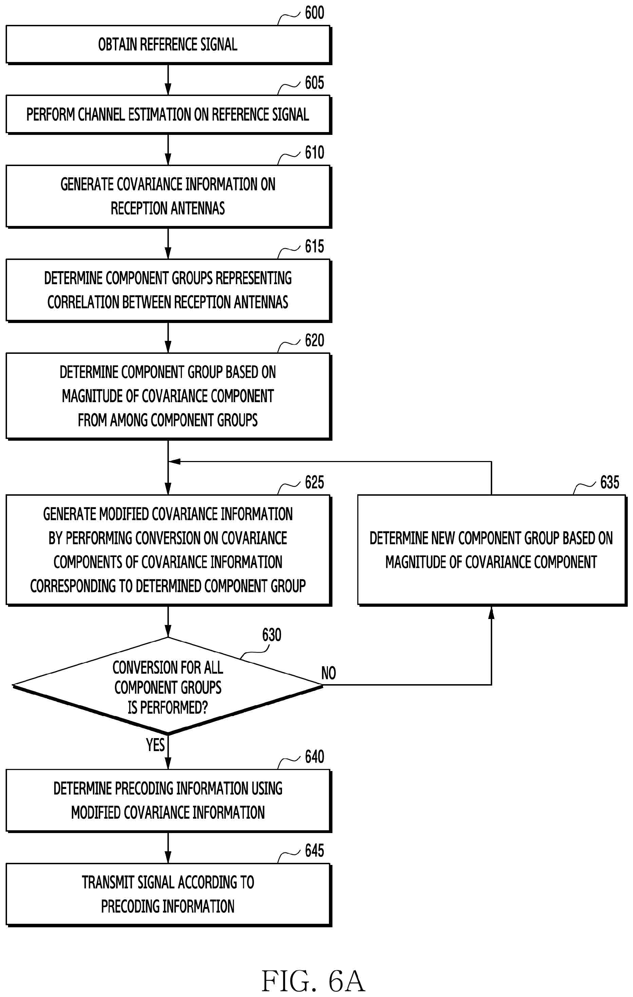

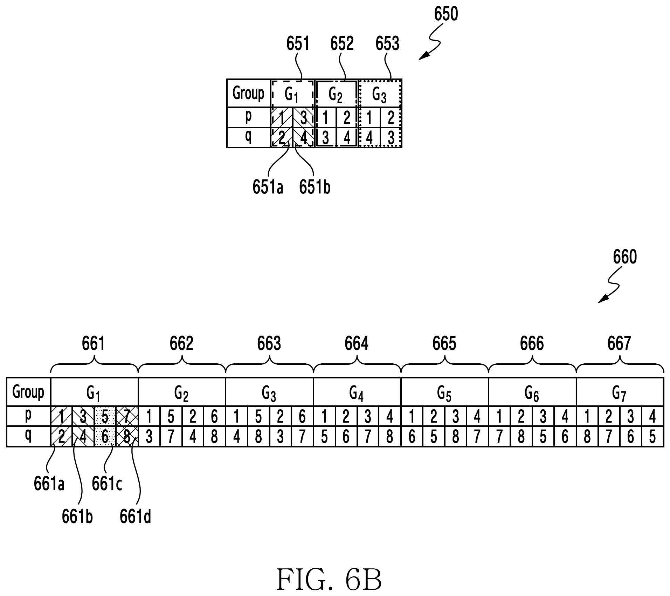

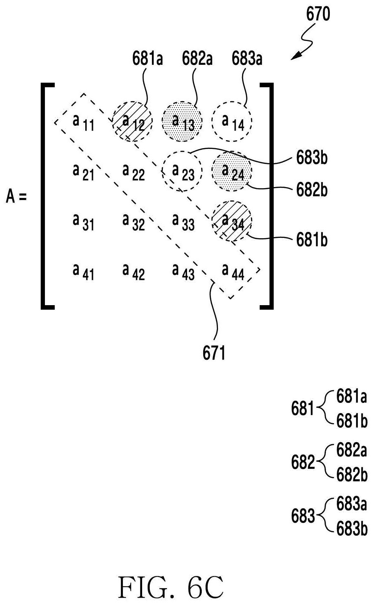

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. A functional configuration, signaling, or an operation of FIG. 6A, FIG. 6B, FIG. 6C to FIG. 11, which will be described later, may be applied not only to the third function split 270a and the fourth function split 270b but also to another function split (e.g., the sixth function split 280). For example, channel estimation may be performed in the O-RU instead of the O-DU. For improvement of uplink performance, the O-RU may also operate according to the sixth function split 280 (Option 7-3).

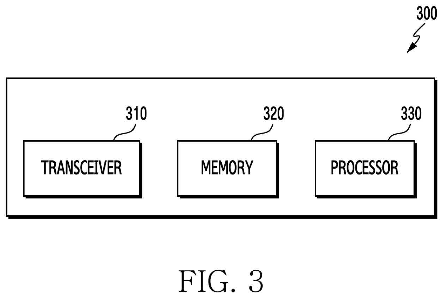

FIG. 3 illustrates an example of a functional configuration of an electronic device.

A configuration of an electronic device 300 illustrated in FIG. 3 may be understood as a configuration of a base station 110, a terminal 120, a DU 210, or an RU 220 (or an MMU). Hereinafter, the terms '...unit' and '...er' used below refer to a unit processing at least one function or operation, which may be implemented by hardware or software, or a combination of hardware and software.

Referring to FIG. 3, the electronic device 300 may include a transceiver 310, memory 320, and a processor 330. However, the present disclosure is not limited thereto. For example, the electronic device 300 may not include at least some of components illustrated in FIG. 3, or may further include components not illustrated in FIG. 3. For example, the electronic device 300 may not include the transceiver 310.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the electronic device 300. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

For example, the processor 330 may include various processing circuitry and/or a plurality of processors. For example, the term "processor" used in this document, including the claims, may include various processing circuitry including at least one processor, and one or more of the at least one processor may be configured to individually and/or collectively perform various functions described below. As used below, in a case that "processor", "at least one processor", and "one or more processors" are described as being configured to perform various functions, these terms are not limited thereto and encompass situations in which one processor performs a portion of cited functions and another processor (or processors) performs another portion of the cited functions, and also situations in which one processor is capable of performing all of the cited functions. Additionally, the at least one processor may include a combination of processors that, for example, perform various enumerated/disclosed functions in a distributed manner. The at least one processor may execute program instructions to achieve or perform various functions.

The processor 330 controls overall operations of the electronic device 300. The processor 330 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3, the electronic device 300 may include two or more processors according to another implementation.

A configuration of the electronic device 300 illustrated in FIG. 3 is only an example, and an example of the electronic device 300 performing the embodiments of the present disclosure is not limited to the configuration illustrated in FIG. 3. In some embodiment, some configurations may be added, deleted, or changed. For example, when the electronic device 300 is an RU, the electronic device 300 may further include a fronthaul transceiver. For example, the fronthaul transceiver may transmit and receive a signal on a fronthaul interface. For example, the fronthaul transceiver may receive a management plane (M-plane) message. For example, the fronthaul transceiver may receive a synchronization plane (S-plane) message. For example, the fronthaul transceiver may receive a control plane (C-plane) message. For example, the fronthaul transceiver may transmit a user plane (U-plane) message. For example, the fronthaul transceiver may receive a user plane message.

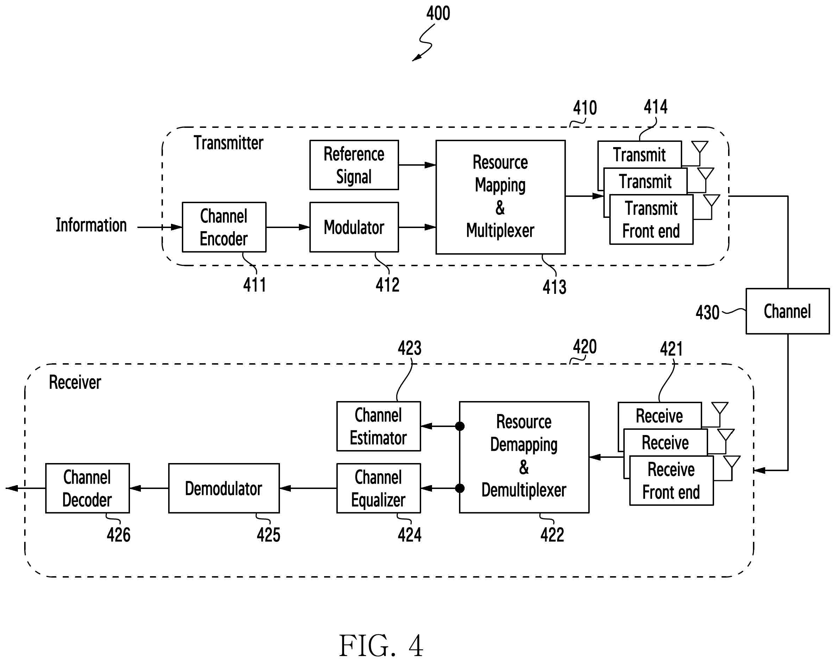

FIG. 4 illustrates an example of a transmission/reception end of multiple input multiple output (MIMO).

Referring to FIG. 4, a communication system 400 (e.g., a wired and wireless communication system, or a broadcasting system) for supporting MIMO may include a transmission end 410 and a reception end 420 as a portion of an electronic device or nodes using a channel 430 (e.g., a wired or wireless channel, or a channel in which wired and wireless are combined). Hereinafter, in the present disclosure, the transmission end 410 and the reception end 420 may be referred to as a transmitter or a receiver, respectively.

Each of the transmission end 410 and the reception end 420 of FIG. 4 may be included in an electronic device 300. For example, when the transmission end 410 is included in the terminal 120 of FIG. 1, the reception end 420 may be included in the base station 110 of FIG. 1. For example, when the transmission end 410 is included in the terminal 120 of FIG. 1, the reception end 420 may be included in the DU 210 of FIG. 2A (or the RU 220, or the DU 210 and the RU 220). However, an embodiment of the present disclosure is not limited thereto. For example, when the transmission end 410 is included in the base station 110 of FIG. 1, the reception end 420 may be included in the terminal 120 of FIG. 1.

According to an embodiment, the transmission end 410 and the reception end 420 may be included in different electronic devices according to a link formed between communication nodes. For example, the transmission end 410 may be the base station 110, and the reception end 420 may be the terminal 120. In addition, the reception end 420 may be the base station 110, and the transmission end 410 may be the terminal 120. For example, the transmission end 410 or the reception end 420 may be included in the base station 110 including a digital unit (DU) (e.g., the DU 210 of FIG. 2A) and a radio unit (RU) (e.g., the RU 220 of FIG. 2A). For example, at least some of signal processing operations of the transmission end 410 or the reception end 420 may be performed in the DU of the base station 110.

Hereinafter, although a subject transmitting a signal is described as the transmission end 410 and a subject receiving a signal is described as the reception end 420, this is merely a functional expression for describing a signal processing procedure and is not to be interpreted as limiting a specific embodiment. For convenience of description, FIG. 4 exemplifies the communication system 400 in which the transmission end 410 and the reception end 420 are implemented as different electronic devices or nodes. However, the transmission end 410 and the reception end 420 may be included in one electronic device.

According to an embodiment, the transmission end 410 may perform conversion between a baseband signal and a bit stream according to a physical layer standard of a system. For example, the transmission end 410 may generate a codeword by encoding information bits based on at least one channel encoder 411. The transmission end 410 may generate complex symbols through a modulator 412 based on the encoded codeword. The transmission end 410 may process, through a resource mapping and multiplexer 413, a reference signal known by the transmission end 410 together with the complex symbols. For example, the transmission end 410 may perform time/space/frequency resource mapping on the complex symbols and the reference signal, and may perform multiplexing on the same using an orthogonal frequency division multiple access (OFDM)/discrete Fourier transform-spread-OFDM (DFT-s-OFDM)/ code division multiple access (CDMA) method, and the like. The transmission end 410 may transmit a signal processed through a transmission front end 414. For example, in the communication system 400 supporting MIMO, the transmission front end 414 of the transmission end 410 may include a plurality of transmission antennas. However, the present disclosure is not limited thereto. For example, in the communication system 400 supporting MIMO, the transmission front end 414 of the transmission end 410 may include one transmission antenna. For example, the transmission end 410 may up-convert a baseband signal into a radio frequency (RF) signal and then transmit the RF signal through an antenna. As the transmitted RF signal passes through the channel 430, the RF signal may be affected by damage or gain decrease, and the like due to background noise, interference, fading, and the like.

According to an embodiment, the reception end 420 may receive, through a reception front end 421, an RF signal transmitted from the transmission end 410 and passing through the channel 430. For example, in the communication system 400 supporting MIMO, the reception front end 421 of the reception end 420 may include a plurality of reception antennas. For example, the RF signal may be received through an antenna after passing through the channel 430. The RF signal may be down-converted into a baseband signal. The reception end 420 may process the baseband signal through a resource demapping and demultiplexer 422. For example, the reception end 420 may divide the baseband signal into a reference signal and a data signal by demultiplexing and demapping the baseband signal. The baseband signal may be referred to as a reception signal received by the reception end 420. The reference signal and the data signal identified by being demultiplexed and demapped from the reception signal may be referred to as a reception reference signal and a reception data signal, respectively. The reception end 420 may estimate the channel 430 from the reference signal through a channel estimator 423. The reception end 420 may perform equalization through a channel equalizer 424 based on information on the channel estimation and the data signal. The reception end 420 may estimate or restore a transmitted bit stream by demodulating and decoding through a demodulator 425 and a channel decoder 426.

In a wireless communication system, MIMO (or a MIMO system) may represent a communication technology in which each of a transmitter (e.g., the transmission end 410 of FIG. 4) and a receiver (e.g., the reception end 420 of FIG. 4) uses a plurality of antennas. A capacity of the MIMO system may increase in proportion to the number of antennas. In addition, massive MIMO may effectively remove interference between a plurality of users by performing beamforming using a plurality of antennas.

The beamforming (or transmission/reception beamforming) may be used for performing effective transmission of data. For efficient beamforming, a decomposition method (or a matrix decomposition method or a matrix decomposition algorithm) for information on a channel between the transmitter and the receiver (or a channel matrix or a channel information matrix) may be considered. For example, the decomposition method may include eigenvalue decomposition (EVD) or singular value decomposition (SVD). However, the exemplified decomposition methods may provide relatively excellent transmission performance, but may require a high amount of computation. Therefore, development of a matrix decomposition method considering a trade-off is required.

Hereinafter, Jacobi rotation (or a Jacobi algorithm) exemplified in the present disclosure is a matrix decomposition method satisfying both complexity and performance. For example, when the Jacobi algorithm is applied to decomposition of a matrix to obtain an eigenvalue (or a singular value), since the Jacobi algorithm has high versatility, the Jacobi algorithm may be used even after pre-processing is applied to the matrix. For example, the pre-processing, which is a method for processing the matrix, may include bi-diagonal transformation. The matrix decomposition method including the Jacobi algorithm may include an operation of removing an off diagonal component (or entry) in the matrix for obtaining a diagonal matrix for eigenvalue decomposition or singular value decomposition.

Hereinafter, the present disclosure proposes a matrix decomposition method based on a Jacobi algorithm used for matrix decomposition. Accordingly, the present disclosure may satisfy requirements of a system and improve efficiency of the system by selecting a matrix decomposition method according to a processing capacity for a digital signal.

Hereinafter, in the present disclosure, the following mathematical symbols may be used.
- In the present disclosure, unless otherwise mentioned, it is assumed that an index of a first element of a set, a sequence, and a vector starts from 1 (one-based numbering).
- A boldface lowercase letter (e.g., **a**) is used to represent a vector, and a boldface uppercase letter (e.g., **A**) is used to represent a matrix. In a case of a vector, unless otherwise mentioned, it represents a column vector. At this time, a vector **aₗ** represents a *l*-th column vector of a matrix **A**.
- For a vector **a** and the matrix **A**, **a***^{H}* and **A***^{H}* represent a complex transpose thereof, respectively.

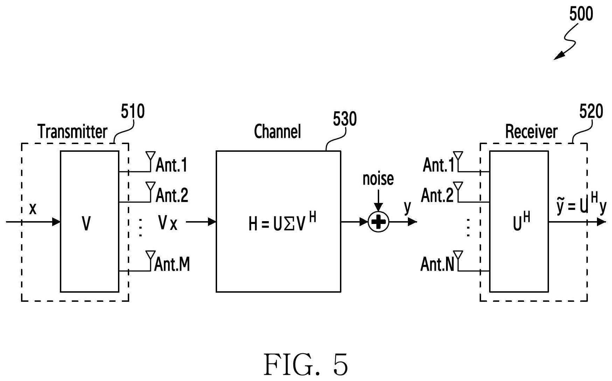

FIG. 5 is a diagram illustrating an example of singular value decomposition (SVD) for channel information in MIMO.

FIG. 5 illustrates an example of SVD for channel information between a transmitter 510 and a receiver 520 in a MIMO system 500. For example, the MIMO system 500 of FIG. 5 may be an example of the communication system 400 of FIG. 4. For example, the transmitter 510 of FIG. 5 may be an example of the transmission end 410 of FIG. 4. For example, the receiver 520 of FIG. 5 may be an example of the reception end 420 of FIG. 4.

Referring to the MIMO system 500, the transmitter 510 may include M antennas (or transmission antennas), and the receiver 520 may include N antennas (or reception antennas). A channel 530 between the transmitter 510 and the receiver 520 may be defined as a channel matrix **H** having a size (or a dimension) of (*N* × M) (*N* ≤M). For example, data streams (or transmission signals) to be transmitted from the transmitter 510 may be defined as a transmission vector **x** having a size of (*S* × 1)(*S* ≤ *M*). For example, reception signals received by the receiver 520 may be defined as a reception vector ***y*** having a size of (*N* × 1). A precoding matrix **V** with respect to the transmission antennas may be applied to the transmission vector **x** before the transmission vector is output from the transmitter 510. For example, output signals to which the precoding matrix **V** is applied may be defined as **Vx**. For example, reception signals **y** may be obtained (or received) through the reception antennas of the receiver 520. For example, the receiver 520 may obtain reception signals **ỹ** estimated from the reception signals **y**. For example, the estimated reception signals **ỹ** may be obtained by a reception matrix **U*^{H}*** with respect to the reception antennas being applied to the reception signals **y**.

For example, the reception signals **y** may have a value reflecting an effect due to the channel 530 and an effect due to noise. For example, the reception signals **y** may be defined as **HVx.** The channel matrix **H** may be decomposed into a plurality of matrices by SVD. For example, the decomposed matrices may be represented as **H** = **UΣV*^{H}***. For example, the **U** may represent a unitary matrix having a size of (*N* × N), the **Σ** may represent a diagonal matrix having a size of (*N* × N), and the **V** may represent a semi-unitary matrix having a size of (M × N).

Referring to the above description, in the MIMO system 500, the transmitter 510 and the receiver 520 may effectively perform communication (or transmission and reception) by diagonalizing **Σ** the channel matrix **H** using appropriate beam matrices **U** and **V**. For example, the beam matrices may include a precoding matrix of the transmitter 510 and a reception matrix of the receiver 520. In the example, the reception matrix is exemplified as **U**, but the present disclosure is not limited thereto. For example, it is assumed that a signal is transmitted from the receiver 520 to the transmitter 510 by using the beam matrices. At this time, the **V** may be referred to as a precoding matrix, and the **U** may be referred to as a reception matrix.

The beam matrices **U** and **V** may be calculated from the channel matrix **H** through various methods (or decomposition methods). For example, the methods may include a power iteration method, a Jacobi algorithm, and a Golub-Kahan (GK) algorithm. For example, the power iteration method has low implementation complexity as an algorithm is relatively simple, but has a disadvantage in that the large number of iterations is required. For example, the GK algorithm has a disadvantage in that an amount of computation is high since it includes bi-diagonalization and QR decomposition, but may have relatively excellent decomposition performance. In addition, as an example of the methods, algorithms such as divide and conquer and gradient descent may be effectively used under a condition in which a size of a matrix is relatively large or sparsity of a matrix is relatively high.

For example, in the MIMO system 500, a size of the channel matrix **H** may be determined based on the number M of transmission antennas and the number N of reception antennas. For example, the number M of transmission antennas may be 32 to 256, and the number N of reception antennas may be 4 or 8. However, the present disclosure is not limited thereto. For example, M and N may be changed according to the MIMO system 500. In the MIMO system 500, a density of the channel matrix **H** may be relatively very high. The density may represent a ratio of components having a non-zero value among components of the channel matrix **H**. In addition, in terms of a sum-rate considered in the MIMO system 500, matrix decomposition with high precision may not be required. Therefore, when a size and characteristics of the channel matrix **H** of the MIMO system 500 are considered, the Jacobi algorithm may be used as a relatively efficient matrix decomposition method. Although various computations of the Jacobi algorithm for decomposing the channel matrix **H** exist, in the following present disclosure, a method of performing matrix decomposition by applying the Jacobi algorithm to a covariance matrix **A** (**A = HH***^{H}* **= UΣ²U***^{H}*) (or covariance information) of a channel (e.g., the channel 530 of FIG. 5) is exemplified. However, the present disclosure is not limited thereto.

For example, the Jacobi algorithm may be performed such that all off diagonal components of the covariance matrix **A** are configured to a reference value (e.g., 0), by performing Jacobi rotation. For example, the reference value may include a value representing that correlation between reception antennas represented by each of covariance components of the covariance matrix **A** is lower than a certain level or absent. For example, one Jacobi rotation may represent a computation of multiplying an orthogonal matrix **J** having a size of (*N* × N) and an orthogonal matrix **J***^{H}* to the covariance matrix **A**. For example, a covariance matrix **B** changed according to the Jacobi rotation may be **|A|***^{H}*. In other words, the computation according to the Jacobi rotation may be referred to as **B ← |A|*^{H}*.** At this time, a covariance component (or an off diagonal component) of the covariance matrix **B**, which is a target of the Jacobi rotation, may be configured (or changed, modified, or removed) to the reference value.

For example, when assuming that an ith-row and jth-column component of the covariance matrix **A** is *aᵢⱼ,* all components satisfying i<j may be targets of the Jacobi rotation. For example, according to (i, j) of the component satisfying i<j,, the orthogonal matrix **J** may be determined. In the example, when a covariance component, which is the target, included in the components satisfying i<j (or upper triangular components) is changed to the reference value, a corresponding lower triangular component of the covariance matrix **B** having a symmetric structure may also be changed to the reference value.

For example, when the covariance component, which is the target of the Jacobi rotation, is *a_{pq}*, the orthogonal matrix **J** may include components *j_{pq}* = *s*, *jₚₚ* = *j_{qq}* = *c,* and *j_{qp}* = *s^{H}*. For example, the orthogonal matrix **J** may be exemplified as follows. $J = \left[\begin{matrix}1 & & & & & & 0 \\ & ⋱ & & & & ⋰ & \\ & & c & & s & & \\ & & - {s}^{H} & & c & & \\ & ⋰ & & & & ⋱ & \\ 0 & & & & & & 1\end{matrix}\right]$

The c at the upper left may indicate a diagonal component ***jₚₚ*** of the orthogonal matrix **J**, the c at the lower right may indicate a diagonal component ***j_{qq}*** of the orthogonal matrix **J**, the s at the upper right may indicate an off diagonal component ***j_{pq}*** of the orthogonal matrix **J**, and the *s^{H}* at the lower left may indicate an off diagonal component ***j_{qp}*** of the orthogonal matrix **J**. The c and s may be determined as values satisfying the following equation. $\left[\begin{matrix}{b}_{pp} & 0 \\ 0 & {b}_{qq}\end{matrix}\right] = \left[\begin{matrix}c & s \\ - {s}^{H} & c\end{matrix}\right] \left[\begin{matrix}{a}_{pp} & {a}_{pq} \\ {a}_{qp} & {a}_{qq}\end{matrix}\right] {\left[\begin{matrix}c & s \\ - {s}^{H} & c\end{matrix}\right]}^{H}$

The *bₚₚ* may indicate a diagonal component (or a variance component) positioned at (p, p) of the covariance matrix **B** changed according to the Jacobi rotation, the ***b_{qq}*** may indicate a diagonal component (or a variance component) positioned at (q, q) of the covariance matrix **B** changed according to the Jacobi rotation, the ***aₚₚ*** may indicate a diagonal component (or a variance component) positioned at (p, p) of the covariance matrix **A** of a channel, the ***a_{pq}*** may indicate an off diagonal component (or a covariance component) positioned at (p, q) of the covariance matrix **A** of the channel, the ***a_{qp}*** may indicate an off diagonal component (or a covariance component) positioned at (q, p) of the covariance matrix **A** of the channel, and the ***a_{qq}*** may indicate a diagonal component (or a variance component) positioned at (q, q) of the covariance matrix **A** of the channel.

The Jacobi rotation may be applied again to the covariance matrix **B** changed from the covariance matrix **A** according to the Jacobi rotation. According to the Jacobi rotation with respect to the covariance matrix **B**, one covariance component among covariance components (or off diagonal components) included in the covariance matrix **B** may be configured to the reference value. As described above, as a plurality of Jacobi rotations are performed (or applied), the covariance matrix **A** may be diagonalized. Since equation **U***^{H}***AU = Σ²** may be established when the covariance matrix **A** is diagonalized, a product between orthogonal matrices **J** (e.g., an orthogonal matrix **J₁**, an orthogonal matrix **J₂**, ...) accumulated while the plurality of Jacobi rotations are applied may be represented as **U***^{H}*. In an example, by using the calculated **U***^{H}*, through equation **U***^{H}***H = ΣV***^{H}*, the **V** may be calculated. Alternatively, the **U***^{H}* and the **V** may be calculated using the channel matrix **H** diagonalized by applying a plurality of Jacobi rotations to the channel matrix **H**.

Referring to the above description, by applying Jacobi rotation to a matrix (e.g., the covariance matrix **A** of the channel), a specific off diagonal component (or covariance component) of the matrix may be configured to the reference value. It is assumed that the matrix includes a plurality of off diagonal components and that a plurality of Jacobi rotations are applied to the matrix for diagonalization of the matrix. At this time, an order in which the Jacobi rotation is applied may be determined between the plurality of off diagonal components.

For example, a greedy optimal (GO) Jacobi algorithm may determine an off diagonal component, which is a target for every Jacobi rotation. For example, a position **(*p, q*)** of the off diagonal component, which is a target, may be determined through equation $\left(p, q\right) = arg {max}_{i < j , i \neq j} \left|{a}_{ij}\right|$. The GO Jacobi algorithm using the equation $\left(p, q\right) = arg {max}_{i < j , i \neq j} \left|{a}_{ij}\right|$ may diagonalize the covariance matrix **A** of a channel relatively quickly, but a computation for sorting off diagonal components may be required for every rotation.

For example, a cyclic Jacobi algorithm may determine an off diagonal component, which is a target of Jacobi rotation, row-by-row. For example, the position **(*p,q*)** of the off diagonal component, which is the target, may be determined row-by-row of the covariance matrix **A**. For example, after performing the Jacobi rotation on each off diagonal component (e.g., (*p,q*) = (1,2),(1,3),(1,4), ...) positioned in a first row of the covariance matrix **A**, the Jacobi rotation may be sequentially performed on each off diagonal component (e.g., (*p,q*) = (2,3),(2,4), ...) positioned in a second row.

For example, a parallel (or concurrent) Jacobi algorithm may determine off diagonal components to which Jacobi rotations are simultaneously applied. When the Jacobi rotation is performed on the off diagonal component at the position **(*p,q*)** of the covariance matrix **A**, the off diagonal component at the position **(*p,q*)** is changed to the reference value, and together with this, values of off diagonal components on a p-th row, a p-th column, a q-th row, and a q-th column may be changed. Therefore, the parallel Jacobi algorithm may not be applied to off diagonal components positioned on a row (e.g., the p-th row or the q-th row) and a column (e.g., the p-th column or the q-th column) of the off diagonal component (e.g., the off diagonal component on the p-th row and the q-th column), which is the target of the Jacobi rotation. However, the parallel Jacobi algorithm may be applied, together with the off diagonal component (e.g., the off diagonal component on the p-th row and the q-th column), to off diagonal components positioned on rows different from and columns different from those of the off diagonal component (e.g., the off diagonal component on the p-th row and the q-th column). Detailed contents related thereto will be described below in FIG. 6B.

Performance and complexity of the Jacobi algorithm may vary according to a method of determining an off diagonal component of a matrix (or a covariance component of a covariance matrix) to which the Jacobi rotation is applied. For example, since the GO Jacobi algorithm changes, at every rotation, a component having the largest magnitude among off diagonal components to a reference value (e.g., 0), a matrix may be diagonalized most quickly compared with other Jacobi algorithms. Accordingly, the GO Jacobi algorithm may have the highest performance. However, since the GO Jacobi algorithm should find an off diagonal component having the largest magnitude at every rotation, an additional computation may be required. For example, in the cyclic Jacobi algorithm and the parallel Jacobi algorithm, an operation (or a computation) for finding an order between off diagonal components of a matrix to which the Jacobi rotation is applied may be omitted. However, compared with the GO Jacobi algorithm, the cyclic Jacobi algorithm and the parallel Jacobi algorithm may have a slower speed at which a matrix is diagonalized. Hereinafter, the present disclosure proposes a Jacobi algorithm that may improve a trade-off between performance and complexity.

As described above, it is assumed that a reception matrix **U** is calculated by applying the Jacobi algorithm to **A**(**= HH***^{H}* **= UΣ²U***^{H}*), which is a Hermitian matrix having a size of (*N* × *N* ). The **A** may be referred to as a covariance matrix of a channel, covariance information of a channel, or a channel covariance matrix. As Jacobi rotation is performed on ***a_{pq}*(*p* < *q*)***,* which is a component of the covariance matrix **A** of the channel, a covariance matrix **B** (i.e., **B ← |A|*^{H}***) may be generated. A sum off(**B**) of squares of off diagonal components (or covariance components) of the covariance matrix **B** may be referenced by the following equation. $off {\left(B\right)}^{2} = off {\left(A\right)}^{2} - 2 {\left|{a}_{pq}\right|}^{2} , off \left(A\right) = \sqrt{{\sum }_{i = 1}^{N} {\sum }_{\begin{matrix}j = 1 \\ j \neq i\end{matrix}}^{N} {\left|{a}_{ij}\right|}^{2}}$

Referring to the above description, in order to modify (or change) the covariance matrix **A** of the channel into a diagonal matrix as quickly as possible, the off(**B**) needs to be minimized. At every rotation, the GO Jacobi algorithm may determine an off diagonal component in which the |*a_{pq}*| is the largest (e.g., an off diagonal component at a position (***p**, *q**)**). The following equation may be referred to as a method of determining the largest off diagonal component. $\left(p*,q*\right) = {argmax}_{p < q , p \neq q} \left|{a}_{pq}\right|$

Since the GO Jacobi algorithm finds, at every rotation, an off diagonal component in which a magnitude thereof has a maximum value, it quickly converges to an ideal eigenvalue decomposition result, but an additional computation for finding **max**|***a_{pq}*|** is required at every rotation. A computation of comparing magnitudes of any two real values is required multiple times to find the off diagonal component in which the magnitude thereof has the maximum value, and one comparison may be defined as one addition (or subtraction) computation. In the present disclosure, for calculation of computational complexity, complexity is compared through the number of addition (or subtraction) computations. For example, in order to find a maximum value among *L* upper triangular off diagonal components (*L* = *N*(*N* - 1)/2) with respect to the covariance matrix **A**, (*L* **-** 1) addition computations are required. When ***T*** Jacobi rotations are performed with respect to a covariance matrix **A**, *T*(*L* - 1) addition computations are required. In contrast, since the cyclic Jacobi algorithm and the parallel (or concurrent) Jacobi algorithm omit determination of the off diagonal component (e.g., the off diagonal component at the position **(*p, q*)**)*,* which is the target of the Jacobi rotation, additional computational complexity may not occur.

Hereinafter, a device, a method, and a storage medium according to the present disclosure may determine off diagonal components, which are targets of Jacobi rotation, by selecting a group among groups corresponding to covariance components of covariance information. For example, when the covariance information is a covariance matrix, the covariance components may represent off diagonal components. For example, the groups may be referred to as component groups. In addition, the device, the method, and the storage medium according to the present disclosure may determine the off diagonal components, which are the targets of the Jacobi rotation, based on a noise power parameter according to an order (or sequence) in which the Jacobi rotation is applied to covariance components. Accordingly, the device, the method, and the storage medium according to the present disclosure may reduce an amount of computation (or computational complexity) and improve (or increase) performance (or diagonalization performance).

FIG. 6A illustrates an example of an operation flow for a method in which an electronic device decomposes covariance information of a channel based on a component group. FIG. 6B illustrates examples of component groups corresponding to covariance components in covariance information of a channel. FIG. 6C illustrates an example of component groups for a covariance matrix of a channel.

At least a portion of the method of FIG. 6A may be performed by the electronic device 300 of FIG. 3. For example, at least a portion of the method may be controlled by the processor 330 of the electronic device 300. In the following embodiment, each operation may be sequentially performed, but is not necessarily performed sequentially. For example, an order of each operation may be changed, and at least two operations may be performed in parallel.

In operation 600, according to an embodiment, the electronic device 300 may obtain a reference signal. For example, the electronic device 300 may obtain reception signals including the reference signal. For example, the electronic device 300 (or a receiver) (e.g., a massive multiple input multiple output unit (MMU) of FIG. 2A) may directly receive, from an external electronic device (or a transmitter), the reception signals through reception antennas. Alternatively, for example, the electronic device 300 (e.g., the DU 210 of FIG. 2A) may receive the reception signals from another electronic device (e.g., the RU 220 of FIG. 2A) that has received the reception signals from the external electronic device through the reception antennas. The reception signals may include the reference signal and a data signal. For example, the reference signal may include an uplink reference signal (e.g., a sounding reference signal (SRS)) or a downlink reference signal (e.g., a channel state information-reference signal (CSI-RS)). However, the present disclosure is not limited thereto.

In operation 605, according to an embodiment, the electronic device 300 may perform channel estimation on the reference signal. For example, the electronic device 300 may generate channel information by performing the channel estimation on the reference signal. For example, the channel information may be referred to as channel estimation information or a channel matrix **H**. For example, the channel information may be associated with transmission antennas (or the number of transmission antennas) used for transmitting the reference signal and reception antennas (or the number of reception antennas) used for receiving the reference signal.

In operation 610, according to an embodiment, the electronic device 300 may generate covariance information on the reception antennas. For example, the electronic device 300 may generate the covariance information of a channel for the reception antennas from the channel information. For example, the covariance information of the channel may be referred to as channel covariance information or a covariance matrix **A**(**A** = **HH***^{H}* = **UΣ²U***^{H}*) of the channel. For example, a size of the covariance information may be associated with the number of reception antennas.

In operation 615, according to an embodiment, the electronic device 300 may determine component groups representing correlation between the reception antennas. For example, the component groups may correspond to covariance components (or off diagonal components) of the covariance information of the channel. For example, each of the component groups may be mapped (or matched, defined, or related) to the covariance components of the covariance information. Covariance components of each of the component groups may represent correlation between reception antennas. FIG. 6B may be referred to for a relationship between the component groups and the covariance components.

Referring to FIG. 6B, an example 650 of component groups for covariance information when the number of reception antennas is 4 and an example 660 of component groups for covariance information when the number of reception antennas is 8 are illustrated. For example, in FIG. 6B, Gn (n = 1, 2, 3, 4, 5, 6, 7) may represent an index of a component group (or a group), and p and q may represent a position (e.g., a p-th row and a q-th column) in the covariance information (or a position of a covariance component). In the examples 650 and 660 of FIG. 6B, covariance components corresponding to the component groups may represent upper triangular components, since the covariance information is a symmetric matrix.

Referring to the example 650, for the covariance information having a size of (4 × 4), three component groups 651, 652, and 653 may be defined. For example, each of the component groups 651, 652, and 653 may correspond to (or be matched with) two covariance components. The first component group 651 may correspond to a covariance component 651a positioned at (1, 2) and a covariance component 651b positioned at (3, 4). For example, the size of the covariance information may be associated with reception antennas. Four reception antennas of the example 650 may include a first reception antenna, a second reception antenna, a third reception antenna, and a fourth reception antenna. For example, the first reception antenna may be associated with a first row and a first column of the covariance information. For example, the second reception antenna may be associated with a second row and a second column of the covariance information. For example, the third reception antenna may be associated with a third row and a third column of the covariance information. For example, the fourth reception antenna may be associated with a fourth row and a fourth column of the covariance information.

Each of the covariance components 651a and 651b corresponding to the first component group 651 may be associated with a pair of two antennas. For example, the pair may be referred to as a reception antenna pair. For example, the covariance component 651a may be associated with a first reception antenna and a second reception antenna. A magnitude of the covariance component 651a may represent a correlation value between the first reception antenna and the second reception antenna. For example, the covariance component 651b may be associated with the third reception antenna and the fourth reception antenna. A magnitude of the covariance component 651b may represent a correlation value between the third reception antenna and the fourth reception antenna. Referring to the above description, the covariance components 651a and 651b corresponding to the first component group 651 may be associated with different reception antennas. The covariance components 651a and 651b corresponding to the first component group 651 may represent covariance components to which Jacobi rotation may be applied simultaneously (or in parallel). In other words, the first component group 651 may represent a set of covariance components to which the Jacobi rotation may be applied simultaneously (or in parallel).

In the example, content for the first component group 651 is described, but the present disclosure is not limited thereto. For example, content for the first component group 651 may be substantially identically applied to the second component group 652 and the third component group 653. For example, the second component group 652 may correspond to a covariance component positioned at (1, 3) and a covariance component positioned at (2, 4). At this time, the covariance component positioned at (1, 3) may represent correlation between the first reception antenna and the third reception antenna. FIG. 6C may be referred to as an example of the covariance information associated with the example 650 of FIG. 6B.

Referring to FIG. 6C, an example of covariance information 670 having a size of (4 × 4) is illustrated. The covariance information 670 may include variance components (or diagonal components) 671 and off diagonal components. For example, the off diagonal components of the covariance information 670 may include upper triangular components (e.g., a₁₂, a₁₃, a₁₄, a₂₃, a₂₄, and a₃₄) and lower triangular components (e.g., a₂₁, a₃₁, a₄₁, a₃₂, a₄₂, and a₄₃). Since the covariance information 670 is a symmetric matrix, each of upper triangular components may have the same value as each of corresponding lower triangular components.

For example, the covariance information 670 may correspond to three component groups 681, 682, and 683. For example, the first component group 681 may correspond to a covariance component 681a (or an off diagonal component) of (1, 2) and a covariance component 681b of (3, 4). For example, the second component group 682 may correspond to a covariance component 682a (or an off diagonal component) of (1, 3) and a covariance component 682b of (2, 4). For example, the third component group 683 may correspond to a covariance component 683a (or an off diagonal component) of (1, 4) and a covariance component 683b of (2, 3).

Referring again to the example 660 of FIG. 6B, seven component groups 661, 662, 663, 664, 665, 666, and 667 may be defined for covariance information having a size of **(8 × 8).** For example, each of the component groups 661, 662, 663, 664, 665, 666, and 667 may correspond to (or be matched with) four covariance components. The first component group 661 may correspond to a covariance component 661a positioned at (1, 2), a covariance component 661b positioned at (3, 4), a covariance component 661c positioned at (5, 6), and a covariance component 661d positioned at (7, 8).

Each of the covariance components 661a, 661b, 661c, and 661d corresponding to the first component group 661 may be associated with a pair of two antennas. For example, the pair may be referred to as a reception antenna pair. For example, the covariance component 661a may be associated with a first reception antenna and a second reception antenna. A magnitude of the covariance component 661a may represent a correlation value between the first reception antenna and the second reception antenna. For example, the covariance component 661b may be associated with a third reception antenna and a fourth reception antenna. A magnitude of the covariance component 661b may represent a correlation value between the third reception antenna and the fourth reception antenna. For example, the covariance component 661c may be associated with a fifth reception antenna and a sixth reception antenna. A magnitude of the covariance component 661c may represent a correlation value between the fifth reception antenna and the sixth reception antenna. For example, the covariance component 661d may be associated with a seventh reception antenna and an eighth reception antenna. A magnitude of the covariance component 661d may represent a correlation value between the seventh reception antenna and the eighth reception antenna.

Referring to the above description, the covariance components 661a, 661b, 661c, and 661d corresponding to the first component group 661 may be associated with different reception antennas. The covariance components 661a, 661b, 661c, and 661d corresponding to the first component group 661 may represent covariance components to which Jacobi rotation may be applied simultaneously (or in parallel). In other words, the first component group 661 may represent a set of covariance components to which Jacobi rotation may be applied simultaneously (or in parallel).

In FIG. 6B, it is assumed that a size P of each component group is N/2 and the number G of component groups is L/P=N-1. The size P of each component group may represent the number of covariance components to which each component group corresponds. However, the present disclosure is not limited thereto. For example, a maximum value of the size P may be N/2. For example, when the size P is changed from N/2 to N/4, the number G of component groups may increase.

Referring again to FIG. 6A, in operation 620, according to an embodiment, the electronic device 300 may determine a component group based on a magnitude of a covariance component among the component groups. For example, the electronic device 300 may determine the component group to which Jacobi rotation is to be applied among the component groups based on a magnitude (or an absolute value) of a covariance component. A method of determining the component group based on the magnitude of the covariance component may include a first method of determining the component group by using a sum of magnitudes of each of covariance components of a component group and a second method of determining the component group corresponding to (or mapped to) a covariance component having a maximum magnitude among covariance components. Detailed content for the methods is described below.

Regarding the first method, according to an embodiment, the electronic device 300 may determine, from among the component groups, a component group in which a sum of magnitudes of each of covariance components corresponding to a component group has a maximum value. For example, the sum of magnitudes of each of the covariance components corresponding to the component group may be referred to as a sum of a component group. The following equation may be referred to for a method of determining the component group to which Jacobi rotation is to be applied based on the sum of the component group. $g * = {arg max}_{1 \leq g \leq G} {\sum }_{\left(p, q\right) ∈ {G}_{g}} \left|{a}_{pq}\right|$

The ***g**** may indicate a component group to which Jacobi rotation is to be applied, the G may indicate the number of component groups, the ***a_{pq}*** may indicate a covariance component of (p, q) (or a p-th row and a q-th column), and the ***G_{g}*** may indicate an index of the component group. Referring to the above description, the electronic device 300 may calculate a sum of a component group (e.g. components included in the component group) with respect to each of component groups (e.g., the component groups 681, 682, and 683 of FIG. 6C). The electronic device 300 may determine a component group (e.g., the first component group 681 of FIG. 6C) in which a sum has a maximum value from among sums of a component group (e.g. components included in the component group) with respect to the component groups (e.g., the component groups 681, 682, and 683 of FIG. 6C).

According to an embodiment, the electronic device 300 may sequentially or parallelly apply Jacobi rotation to covariance components corresponding to the determined component group. The electronic device 300 may configure each of the covariance components corresponding to the component group to a reference value. For example, the electronic device 300 may sequentially configure (or change or modify) each of the covariance components corresponding to the component group to the reference value. For example, the electronic device 300 may parallelly configure (or change or modify) the covariance components corresponding to the component group to the reference value.

Referring to the above description, when the covariance components corresponding to the determined component group are configured to the reference value, an off **B** value may be decreased by ∑_{(*p,g*)∈*Gg**}|*a_{p-q}*| in Equation 3. Therefore, applying Jacobi rotation to the component group determined based on the sum of the component group may cause fast diagonalization of covariance information (e.g., the covariance matrix **A**).

Computational complexity of the first method based on the sum of the component group, as described above, is as follows. For example, (*P* - 1) addition computations are required for each group to determine an index *g** of a component group having a maximum value, and (*G* - 1) addition computations are required in that it is necessary to determine a component group having a maximum value among *G* groups. In other words, *G* × *P* - 1 = *L* - 1 addition computations, which are a sum of *G* × (*P* - 1) addition computations and (*G* - 1) addition computations, are required. In addition, since the number of Jacobi rotations is *T*/*P* in that one component group may be simultaneously rotated, the number of addition computations representing the computational complexity may be (*T*/*P*) × (*L* - 1). Referring to the above description, the first method based on the sum of the component group may reduce the number of addition computations by a ratio according to a size *P* of a group, compared to a GO Jacobi algorithm.

Regarding the second method, according to an embodiment, the electronic device 300 may determine a component group corresponding to (or mapped to) a covariance component having a maximum magnitude from among covariance components of the covariance information. For example, the following equation may be referred to for the method of determining the component group to which Jacobi rotation is to be applied based on a covariance component having a maximum value from among the covariance components. $g * = {arg max}_{1 \leq g \leq G} \left({max}_{\left(p, q\right) ∈ {G}_{g}}\left|{a}_{pq}\right|\right)$

The ***g**** may indicate a component group to which Jacobi rotation is to be applied, the G may indicate the number of component groups, the ***a_{pq}*** may indicate a covariance component of (p, q) (or a p-th row and a q-th column), and the ***G_{g}*** may indicate an index of the component group. Referring to the above description, the electronic device 300 may calculate a magnitude of each of the covariance components of the covariance information. The electronic device 300 may determine, from among component groups (e.g., the component groups 681, 682, and 683 of FIG. 6C), a component group (e.g., the first component group 681 of FIG. 6C) corresponding to a covariance component in which a magnitude has a maximum value from among the covariance components of the covariance information.

According to an embodiment, the electronic device 300 may sequentially or parallelly apply Jacobi rotation to covariance components corresponding to the determined component group. The electronic device 300 may configure each of the covariance components corresponding to the component group to the reference value. For example, the electronic device 300 may sequentially configure (or change or modify) each of the covariance components corresponding to the component group to the reference value. For example, the electronic device 300 may parallelly configure (or change or modify) the covariance components corresponding to the component group to the reference value.

Computational complexity of the second method based on the covariance component having the maximum magnitude from among the covariance components, as described above, is as follows. The number of addition computations required to determine a covariance component having a maximum value among all ***L*** covariance components (or upper triangular components) is ***L*** - 1, and since the number of Jacobi rotations is ***T*/*P*** in that one component group may be simultaneously rotated, the number of addition computations representing the computational complexity may be (***T*/*P***) × (***L*** - 1). The first method based on the sum of the component group may further require storage of sums with respect to the component groups for comparison between the component groups.

In the example, it is assumed that the size ***P*** of the component group is ***N*/2***,* but the present disclosure is not limited thereto. For example, the maximum size of the size *P* of the component group is ***N*/2***,* and the size ***P*** of the component group may be changed to be smaller. For example, the size *P* of the component group may be changed to ***N*/4** or ***N*/8** according to an ***N*** value.

In operation 625, according to an embodiment, the electronic device 300 may generate modified covariance information by performing conversion on covariance components of the covariance information corresponding to the determined component group. For example, the electronic device 300 may configure each of the covariance components of the covariance information corresponding to the determined component group to the reference value. For example, the electronic device 300 may parallelly or sequentially apply Jacobi rotation to the covariance components of the covariance information corresponding to the determined component group. For example, the electronic device 300 may generate the modified covariance information changed from the covariance information by configuring each of the covariance components of the covariance information corresponding to the determined component group to the reference value. For example, the modified covariance information may represent a covariance matrix in which, from among all covariance components included in the covariance information, covariance components corresponding to the determined component group are changed to the reference value.

In operation 630, according to an embodiment, the electronic device 300 may determine whether conversion has been performed on all component groups. For example, the electronic device 300 may determine whether conversion (or Jacobi rotation) has been performed on all of the component groups defined for the covariance information. For example, when three component groups are defined for the covariance information, the electronic device 300 may determine whether the conversion has been performed on all of the three component groups.

In the operation 630, when conversion for all component groups has been performed, the electronic device 300 may perform operation 640. In contrast, in the operation 630, when conversion for at least one component group has not been performed, the electronic device 300 may perform operation 635.

In the operation 635, according to an embodiment, the electronic device 300 may determine a new component group based on a magnitude of a covariance component. For example, the electronic device 300 may determine the new component group from among the at least one component group in which conversion has not been performed among the component groups. For example, determining the new component group may be performed based on Equation 5 or Equation 6, as in the operation 620. Thereafter, in the operation 625 performed again, the electronic device 300 may generate new modified covariance information by performing conversion for the determined new component group. The new modified covariance information may be generated from the modified covariance information by configuring covariance components of the modified covariance information corresponding to the new component group to the reference value.

In the operation 640, according to an embodiment, the electronic device 300 may determine precoding information by using the modified covariance information. For example, the electronic device 300 may calculate the precoding information by using the modified covariance information generated in the operation 625. In an example, the modified covariance information may be a diagonal matrix. For example, the precoding information may include a reception matrix that is applied when the reference signal is received through the reception antennas. For example, the electronic device 300 may use the reception matrix as a precoding matrix to transmit a signal by using the reception antennas. However, the present disclosure is not limited thereto. For example, for transmission of a signal, the electronic device 300 may generate the precoding information (or a precoding matrix) changed from the reception matrix based on channel information (or a channel matrix).

In operation 645, according to an embodiment, the electronic device 300 may transmit a signal according to the precoding information. For example, according to the precoding information, the electronic device 300 may transmit the signal to the external electronic device that has transmitted the reference signal.

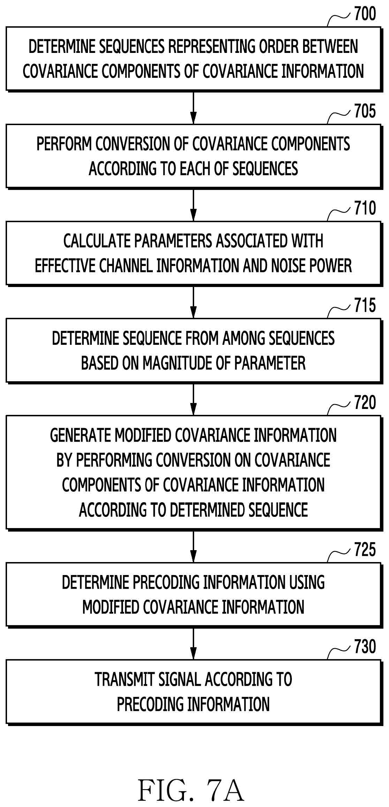

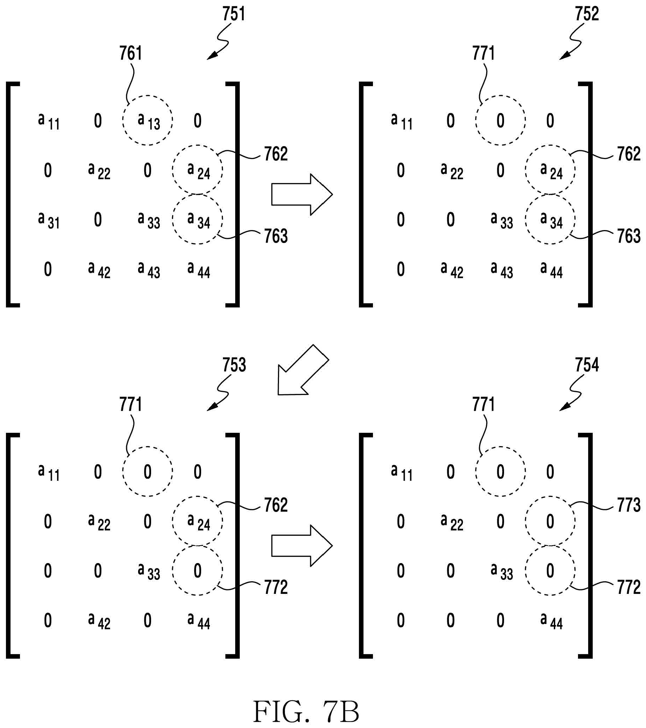

FIG. 7A illustrates an example of an operation flow for a method in which an electronic device decomposes covariance information of a channel based on a sequence of covariance components. FIG. 7B illustrates an example of covariance information of a channel decomposed according to a sequence of covariance components.

At least a portion of the method of FIG. 7A may be performed by the electronic device 300 of FIG. 3. For example, at least a portion of the method may be controlled by the processor 330 of the electronic device 300. In the following embodiment, each operation may be sequentially performed, but is not necessarily performed sequentially. For example, an order of each operation may be changed, and at least two operations may be performed in parallel.

In operation 700, according to an embodiment, the electronic device 300 may determine sequences representing an order between covariance components of covariance information.

For example, the covariance information may include covariance information of a channel for reception antennas generated from channel information, as in the operation 610 of FIG. 6A. Alternatively, the covariance information may be modified covariance information in which conversion for covariance components of covariance information corresponding to a determined component group is performed, in the operation 625 of FIG. 6A. In other words, the covariance information of the operation 700 may be covariance information to which pre-processing is not performed (e.g., the covariance information generated in the operation 610 of FIG. 6A) or may include covariance information to which the pre-processing is performed (e.g., the modified covariance information generated in the operation 625 of FIG. 6A). For example, the pre-processing may include a Jacobi algorithm or another type of matrix conversion (e.g., bi-diagonalization transformation).

According to an embodiment, each of the sequences may represent an order in which Jacobi rotation is to be applied between the covariance components of the covariance information. For example, when the number of the covariance components is L, the number of the sequences may be L!.

In operation 705, according to an embodiment, the electronic device 300 may perform conversion of the covariance components according to each of the sequences. For example, the electronic device 300 may configure the covariance components to the reference value according to the order indicated by each of the sequences. FIG. 7B may be referred to for detailed content for the operation 700 and the operation 705.

Referring to FIG. 7B, examples 751, 752, 753, and 754 for a method of performing conversion of the covariance components of the covariance information according to a specific sequence among the sequences are illustrated. In the examples 751, 752, 753, and 754 of FIG. 7B, the covariance information may be a covariance matrix having a size of (4 × 4). For example, the covariance information may include three covariance components 761, 762, and 763 (or off diagonal components), which are not the reference value, from among upper triangular components. For example, the covariance components 761, 762, and 763 may include a₁₃, a₂₄, and a₃₄.

According to an embodiment, the number of sequences may be determined based on the number of the covariance components 761, 762, and 763. In an example of FIG. 7B, the number of the sequences may be 6. For example, the sequences may include a first sequence indicating an order of [a₁₃, a₂₄, a₃₄], a second sequence indicating an order of [a₁₃, a₃₄, a₂₄], a third sequence indicating an order of [a₂₄, a₁₃, a₃₄], a fourth sequence indicating an order of [a₂₄, a₃₄, a₁₃], a fifth sequence indicating an order of [a₃₄, a₁₃, a₂₄], and a sixth sequence indicating an order of [a₃₄, a₂₄, a₁₃]. For example, the sequences may indicate the order in which Jacobi rotation is applied. For example, when three Jacobi rotations are applied to the covariance information according to the second sequence, after a first Jacobi rotation is performed on a₁₃, a second Jacobi rotation may be performed on a₃₄, and finally, a third Jacobi rotation may be performed on a₂₃.

In the example 752, according to the first Jacobi rotation for the covariance information, the covariance component 761 (a₁₃) may be configured (or changed or modified) to a reference value 771. According to the first Jacobi rotation, a magnitude of the covariance component 763 (a₃₄) may be changed, but may not be changed to the reference value. According to the first Jacobi rotation, a magnitude of the covariance component 762 (a₂₄) may be maintained. This may be because the covariance component 762 (a₂₄) is associated with reception antennas different from reception antennas associated with the covariance component 761 (a₁₃) (e.g., a first row, a first column, a third row, and a third column).

In the example 753, according to the second Jacobi rotation for the covariance information on which the first Jacobi rotation has been performed, the covariance component 763 (a₃₄) may be configured (or changed or modified) to a reference value 772. According to the second Jacobi rotation, a magnitude of the covariance component 762 (a₂₄) may be changed, but may not be changed to the reference value. Thereafter, in the example 754, according to the third Jacobi rotation for the covariance information on which the second Jacobi rotation has been performed, the covariance component 762 (a₂₄) may be configured (or changed or modified) to a reference value 773.

Referring to the examples 751, 752, 753, and 754, according to a specific sequence (e.g., the second sequence), the covariance components of the covariance information may be configured (or changed or modified) to the reference value. In the example, conversion according to one sequence is exemplified, but the present disclosure is not limited thereto. For example, conversion according to each of the first sequence, the third sequence, the fourth sequence, the fifth sequence, and the sixth sequence of the covariance information of FIG. 7B may be performed.

Referring again to FIG. 7A, in operation 710, the electronic device 300 may calculate parameters associated with effective channel information and noise power. For example, the electronic device 300 may calculate a parameter associated with the effective channel information and the noise power for each sequence. For example, the electronic device 300 may calculate a parameter according to a sequence. For example, the parameter may be referred to as a noise power parameter. For example, the parameter may include a sum-rate or a signal to noise ratio (SNR).

In operation 715, the electronic device 300 may determine a sequence from among the sequences based on a magnitude of a parameter. For example, the electronic device may determine the sequence in which the magnitude of the parameter has a maximum value from among the sequences. A method of determining the sequence based on the magnitude of the parameter may include a method based on the sum-rate and a method based on the SNR. The method based on the sum-rate may refer to the following equation. $j * = {argmax}_{j} \left(log det\left(I+\frac{1}{{σ}_{n}^{2}}{H}_{eff , j}^{H}⋅{H}_{eff , j}\right)\right)$

The *j** may indicate an index of the determined sequence, the ${σ}_{n}^{2}$ may indicate noise power, the I may indicate an identity matrix, and the **H_{eff,*j*}** may indicate effective channel information (or an effective channel matrix). For example, the effective channel information may be calculated through a computation of a channel matrix **H** and a precoding matrix **V** of a transmission end calculated by using covariance information to which Jacobi rotation is applied according to a sequence in which an index is j, as in equation **H**_{eff,*j*} = **HV*ⱼ***. The equation $log det \left(I+\frac{1}{{σ}_{n}^{2}}{H}_{eff , j}^{H}⋅{H}_{eff , j}\right)$ may be used to calculate the sum-rate.

The method based on the SNR may refer to the following equation. $j ′ = {arg max}_{j} \left({\sum }_{l = 1}^{N} {\left[{\left({H}_{eff , j}^{H}⋅{H}_{eff , j}+{σ}_{n}^{2}I\right)}^{- 1}\right]}_{l , l}\right)$

The *j** may indicate an index of the determined sequence, the [·**]***_{l,l}* may indicate a *l*-th row and *l*-th column component of a matrix, the ${σ}_{n}^{2}$ may indicate noise power, the **I** may indicate an identity matrix, and the **H**_{eff,*j*} may indicate effective channel information (or an effective channel matrix). For example, the effective channel information may be calculated through the computation of the channel matrix **H** and the precoding matrix **V** of the transmission end calculated by using covariance information to which the Jacobi rotation is applied according to the sequence in which the index is j, as in equation **H**_{eff,j} = **HV*ⱼ*** . Equation ${\sum }_{l = 1}^{N} {\left[{\left({H}_{eff , j}^{H}⋅{H}_{eff , j}+{σ}_{n}^{2}I\right)}^{- 1}\right]}_{l , l}$ may be used to calculate the SNR.

According to an embodiment, based on the Equation 7 or the Equation 8, the electronic device 300 may determine, from among the sequences, a sequence in which a magnitude of a value representing the sum-rate has a maximum value or a sequence in which a magnitude of a value representing the SNR has a maximum value. For example, the electronic device 300 may determine a parameter in which a magnitude of a parameter has a maximum value from among the parameters for the sequences, and may determine a sequence corresponding to the parameter having the maximum value from among the sequences.

In operation 720, according to an embodiment, the electronic device 300 may generate modified covariance information by performing conversion on the covariance components of the covariance information according to the determined sequence. For example, according to the sequence determined in the operation 715, the electronic device 300 may configure each of the covariance components of the covariance information to the reference value. The electronic device 300 may generate the modified covariance information changed from the covariance information by configuring each of the covariance components of the covariance information to the reference value. In an example, the modified covariance information may be a diagonal matrix. However, the present disclosure is not limited thereto. For example, the modified covariance information may also be an off diagonal matrix including some off diagonal components.

In operation 725, according to an embodiment, the electronic device 300 may determine precoding information by using the modified covariance information. For example, the electronic device 300 may calculate the precoding information by using the modified covariance information generated in the operation 720. In an example, the modified covariance information may be a diagonal matrix. For example, the precoding information may include a reception matrix that is applied when the reference signal is received through the reception antennas. For example, the electronic device 300 may use the reception matrix as a precoding matrix to transmit a signal by using the reception antennas. However, the present disclosure is not limited thereto. For example, for transmission of a signal, the electronic device 300 may generate the precoding information (or a precoding matrix) changed from the reception matrix based on channel information (or a channel matrix).

In operation 730, according to an embodiment, the electronic device 300 may transmit a signal according to the precoding information. For example, according to the precoding information, the electronic device 300 may transmit the signal to the external electronic device that has transmitted the reference signal.

Referring to the above description, in the operation 700, it is described that the electronic device 300 determines the sequences regardless of the number of covariance components of the covariance information different from the reference value, but the present disclosure is not limited thereto. According to an embodiment, when the number of covariance components having a value different from the reference value among all covariance components of the covariance information is less than the reference number, the electronic device 300 may determine the sequences in the operation 710. For example, when the number of covariance components that are not the reference value is less than the reference number, the electronic device 300 may determine the sequences for the covariance components that are not the reference value. This may be because, as the number of the covariance components increases, complexity of determining the sequences and performing an operation according thereto increases.

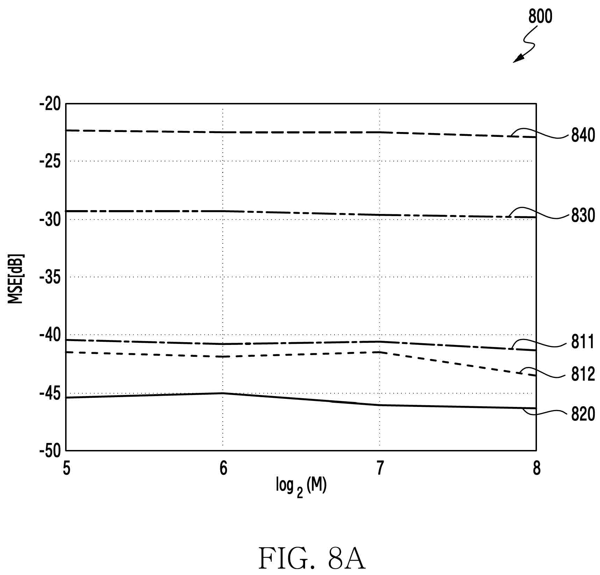

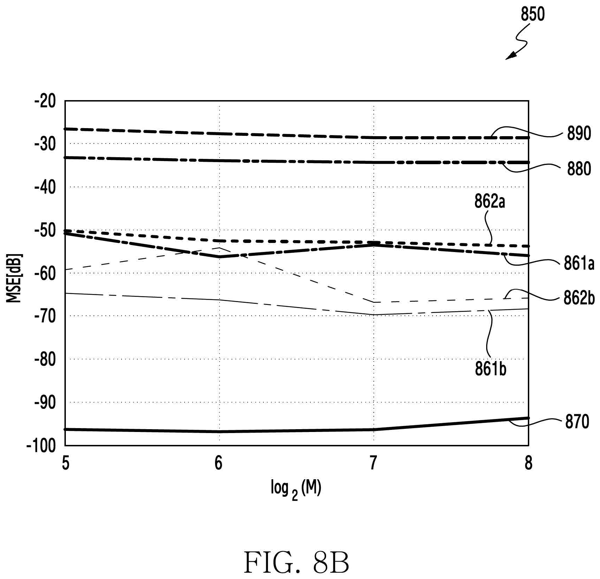

FIGS. 8A and 8B illustrate examples of graphs illustrating a mean square error (MSE) according to the number of transmission antennas.

FIGS. 8A and 8B illustrate graphs 800 and 850 illustrating MSE according to the number of transmission antennas for matrix decomposition methods. A horizontal axis of the graphs 800 and 850 indicates log₂(M) for the number M of transmission antennas, and a vertical axis indicates MSE (unit: decibel (dB)). For example, the MSE may be calculated based on the following equation. $MSE \left(dB\right) = 10 lo {g}_{10} \left(\frac{mean \left({\left|{{u}^{˜}}_{ij}-{\hat{u}}_{ij}\right|}^{2}\right)}{mean \left({\left|{{u}^{˜}}_{ij}\right|}^{2}\right)}\right)$

The *ũᵢⱼ* may indicate a component of an i-th row and a j-th column of a precoding matrix **Ũ** generated from a channel matrix **H** (or a covariance matrix **A** of a channel ) according to an ideal decomposition result, and the *ûᵢⱼ* may indicate a component of an i-th row and a j-th column of the precoding matrix **Û** calculated through a Jacobi algorithm from the channel matrix **H** (or the covariance matrix **A** of the channel).

The graph 800 assumes a case in which the number N of reception antennas is 4, the number L of covariance components of a matrix (e.g., covariance information of a channel or a covariance matrix of a channel) to which a Jacobi algorithm is applied is 6, and the number T=2*L of Jacobi rotations is 12. The graph 800 may include a first line 811 representing the first method based on Equation 5, a second line 812 representing the second method based on Equation 6, a third line 820 representing a GO Jacobi algorithm, a fourth line 830 representing a cyclic Jacobi algorithm, and a fifth line 840 representing a parallel (or concurrent) Jacobi algorithm.

Referring to the graph 800, the first line 811 and the second line 812 may have a relatively low MSE value compared with the fourth line 830 and the fifth line 840. For example, the first line 811 may have a value of about -40 dB according to the number M of transmission antennas. For example, the second line 812 may have a value of about -42 dB according to the number M of transmission antennas. Referring to the graph 800, the first method and the second method may have relatively high performance compared with the cyclic Jacobi algorithm and the parallel Jacobi algorithm. For example, the third line 820 may have a value of about -45 dB according to the number M of transmission antennas. When the MSEs are compared, the GO Jacobi algorithm may have the highest performance.

The graph 850 assumes a case in which the number N of reception antennas is 8, the number L of covariance components of a matrix (e.g., covariance information of a channel or a covariance matrix of a channel) to which a Jacobi algorithm is applied is 27, and the number T=3*L of Jacobi rotations is 81. The graph 850 may include a first line 861a representing the first method based on Equation 5 when a size P of a component group is a first size, a second line 861b representing the first method based on Equation 5 when the size P of the component group is a second size, a third line 862a representing the second method based on Equation 6 when the size P of the component group is the first size, a fourth line 862b representing the second method based on Equation 6 when the size P of the component group is the second size, a fifth line 870 representing a GO Jacobi algorithm, a sixth line 880 representing a cyclic Jacobi algorithm, and a seventh line 890 representing a parallel Jacobi algorithm. For example, the first size may be greater than the second size. For example, the first size may be 4, and the second size may be 2. However, the present disclosure is not limited thereto.

Referring to the graph 850, the first line 861a, the second line 861b, the third line 862a, and the fourth line 862b may have a relatively low MSE value compared with the sixth line 880 and the seventh line 890. For example, the first line 861a may have a value of about -55 dB according to the number M of transmission antennas. For example, the second line 861b may have a value of about -65 dB according to the number M of transmission antennas. For example, the third line 862a may have a value of about -52 dB according to the number M of transmission antennas. For example, the fourth line 862b may have a value of about -55 to about -65 dB according to the number M of transmission antennas. Referring to the first line 861a, the second line 861b, the third line 862a, and the fourth line 862b, as the size P of the component group decreases, performance may increase. This may be because Jacobi rotation is performed more frequently as the size P of the component group decreases.

Referring to the graph 850, the first method and the second method may have relatively high performance compared with the cyclic Jacobi algorithm and the parallel Jacobi algorithm. For example, the fifth line 870 may have a value of about -95 dB according to the number M of transmission antennas. When the MSEs are compared, the GO Jacobi algorithm may have the highest performance.

An amount of computation (or computational complexity) of matrix decomposition methods, other than performance of the matrix decomposition methods exemplified in FIGS. 8A and 8B, may be exemplified as shown in the following table.

**[Table 1]**

| | *N* = | *N* = 8 | *N = 16* |
|---|---|---|---|
| Greedy optimal | 100 | 100 | 100 |
| First method, Second method | 50 | 25 | 12.5 |

The table may represent a case assuming that an amount of computation of the GO Jacobi algorithm is 100. For example, when compared with the amount of computation of the GO Jacobi algorithm, an amount of computation according to the first method and the second method may be reduced to a level of at most 2/N. Referring to the above description, the first method and the second method according to the present disclosure may have a lower amount of computation than the GO Jacobi algorithm and may have higher performance than the cyclic Jacobi algorithm and the parallel (or concurrent) Jacobi algorithm. The first method and the second method according to the present disclosure may improve performance of the Jacobi algorithm by using a relatively simple sorting computation in the limited number of iterations (or the number of Jacobi rotations). In addition, the first method and the second method according to the present disclosure may flexibly satisfy a trade-off between performance and complexity required in various scenarios by adjusting a size of a component group. When the first method and the second method are compared, the first method may have relatively high performance in terms of MSE performance, and the second method may be relatively easy in terms of implementation.

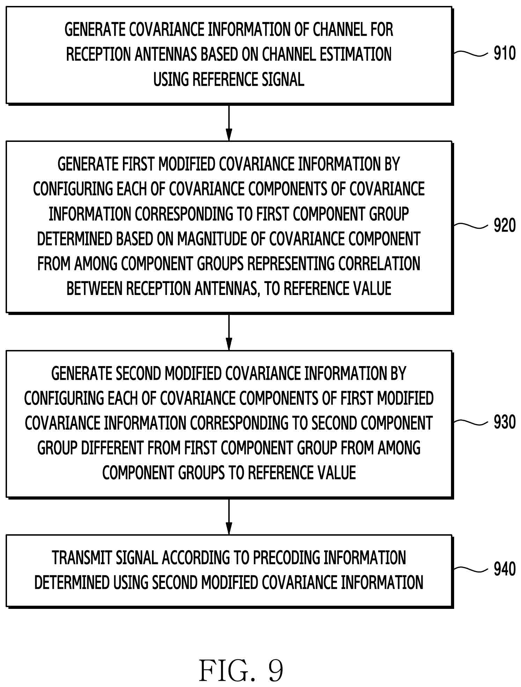

FIG. 9 illustrates an example of an operation flow for a method in which an electronic device decomposes covariance information of a channel based on a component group and transmits data.

At least a portion of the method of FIG. 9 may be performed by the electronic device 300 of FIG. 3. For example, at least a portion of the method may be controlled by the processor 330 of the electronic device 300. In the following embodiment, each operation may be sequentially performed, but is not necessarily performed sequentially. For example, an order of each operation may be changed, and at least two operations may be performed in parallel.

According to an embodiment, in operation 910, the electronic device 300 may generate covariance information of a channel for reception antennas based on channel estimation using a reference signal. For example, the electronic device 300 may generate the covariance information of the channel based on the channel estimation using the reference signal obtained from another electronic device.

According to an embodiment, the electronic device 300 may perform the channel estimation on the reference signal. For example, the electronic device 300 may generate channel information by performing the channel estimation on the reference signal. For example, the channel information may be referred to as channel estimation information or a channel matrix **H**. For example, the channel information may be associated with transmission antennas (or the number of transmission antennas) used for transmitting the reference signal and reception antennas (or the number of reception antennas) used for receiving the reference signal.

According to an embodiment, the electronic device 300 may generate covariance information on the reception antennas. For example, the electronic device 300 may generate the covariance information of a channel for the reception antennas from the channel information. For example, the covariance information of the channel may be referred to as channel covariance information or a covariance matrix **A**(**A** = **HH***^{H}* = **UΣ²U**^{H}) of the channel. For example, a size of the covariance information may be associated with the number of reception antennas.

According to an embodiment, in operation 920, the electronic device 300 may generate first modified covariance information by configuring each of covariance components of the covariance information, corresponding to a first component group determined based on a magnitude of a covariance component from among the component groups representing correlation between the reception antennas, to a reference value. Hereinafter, for convenience of description, from among all covariance components of the covariance information, the covariance components corresponding to the first component group may be referred to as first covariance components.

According to an embodiment, the electronic device 300 may determine the component groups representing correlation between the reception antennas. For example, the component groups may correspond to covariance components (or off diagonal components) of the covariance information of the channel. For example, each of the component groups may be mapped (or matched, defined, or related) to covariance components of the covariance information. Covariance components of each of the component groups may represent correlation between reception antennas. FIG. 6B may be referred to for an example of a relationship between the component groups and covariance components.

According to an embodiment, the electronic device 300 may determine the first component group based on a magnitude of a covariance component from among the component groups. For example, the electronic device 300 may determine the first component group to which Jacobi rotation is to be applied from among the component groups, based on a magnitude (or an absolute value) of a covariance component. A method of determining the first component group based on the magnitude of the covariance component may include the first method of determining the component group by using a sum of magnitudes of each of covariance components of a component group and the second method of determining the component group corresponding to (or mapped to) a covariance component having a maximum magnitude among covariance components. FIG. 6b may be referred to for detailed content for the methods.

According to an embodiment, the electronic device 300 may generate the first modified covariance information by performing conversion on the first covariance components of the covariance information corresponding to the determined first component group. For example, the electronic device 300 may configure each of the first covariance components of the covariance information corresponding to the first component group to the reference value. For example, the electronic device 300 may apply parallelly or sequentially Jacobi rotation to the first covariance components of the covariance information corresponding to the first component group. For example, the electronic device 300 may generate the first modified covariance information changed from the covariance information by configuring each of the first covariance components of the covariance information corresponding to the first component group to the reference value. For example, the first modified covariance information may represent a covariance matrix in which the first covariance components corresponding to the first component group from among all covariance components included in the covariance information are changed to the reference value.

According to an embodiment, in operation 930, the electronic device 300 may generate second modified covariance information by configuring each of covariance components of the first modified covariance information, corresponding to a second component group different from the first component group from among the component groups, to the reference value. Hereinafter, for convenience of description, from among all covariance components of the first modified covariance information, the covariance components corresponding to the second component group may be referred to as second covariance components. For example, the electronic device 300 may determine the second component group based on a magnitude of a covariance component from among remaining component groups excluding the first component group from among the component groups. For example, the second component group may be determined by applying the first method or the second method to the remaining component groups. For example, after determining the second component group, the electronic device 300 may configure each of the second covariance components of the first modified covariance information corresponding to the second component group to the reference value.

Referring to the above description, the electronic device 300 may perform conversion on the second component group for the first modified covariance information changed from the covariance information as it performs conversion on the first component group. As the electronic device 300 performs conversion on the second component group, it may generate the second modified covariance information changed from the first modified covariance information.

According to an embodiment, in operation 940, the electronic device 300 may transmit a signal according to precoding information determined using the second modified covariance information. For example, the electronic device 300 may transmit, to the another electronic device, the signal according to the precoding information determined using the second modified covariance information. In an example, the second modified covariance information may be a diagonal matrix. However, the present disclosure is not limited thereto. For example, when a reference precision based on a sum-rate is satisfied, the electronic device 300 may determine the precoding information using the second modified covariance information including some off diagonal components and may transmit the signal according to the determined precoding information.

For example, the precoding information may include a reception matrix that is applied when the reference signal is received through the reception antennas. For example, the electronic device 300 may use the reception matrix as a precoding matrix to transmit a signal by using the reception antennas. However, the present disclosure is not limited thereto. For example, for transmission of a signal, the electronic device 300 may generate the precoding information (or a precoding matrix) changed from the reception matrix based on channel information (or a channel matrix).

Referring to FIGS. 1 to 9, a device, a method, and a storage medium according to the present disclosure may determine off diagonal components, which are targets of Jacobi rotation, by selecting a group among groups corresponding to covariance components of covariance information. For example, when the covariance information is a covariance matrix, the covariance components may represent off diagonal components. For example, the groups may be referred to as component groups. In addition, the device, the method, and the storage medium according to the present disclosure may determine the off diagonal components, which are the targets of the Jacobi rotation, based on a noise power parameter according to an order (or sequence) in which the Jacobi rotation is applied to covariance components. Accordingly, the device, the method, and the storage medium according to the present disclosure may reduce an amount of computation (or computational complexity) and improve (or increase) performance (or diagonalization performance).

The effects that may be obtained from the present disclosure are not limited to those described above, and any other effects not mentioned herein will be clearly understood by those having ordinary knowledge in the art to which the present disclosure belongs, from the following description.

As described above, an electronic device may comprise at least one processor comprising processing circuitry. The electronic device may comprise memory, including one or more storage mediums, storing instructions. The instructions, when executed by the at least one processor individually or collectively, may cause the electronic device to generate covariance information of a channel for reception antennas, based on channel estimation using a reference signal obtained from another electronic device. The instructions, when executed by the at least one processor individually or collectively, may cause the electronic device to, by configuring each of covariance components of the covariance information, corresponding to a first component group determined based on a magnitude of a covariance component from among component groups representing correlation between the reception antennas, to a reference value, generate first modified covariance information. The instructions, when executed by the at least one processor individually or collectively, may cause the electronic device to, by configuring each of covariance components of the first modified covariance information, corresponding to a second component group different from the first component group from among the component groups, to the reference value, generate second modified covariance information. The instructions, when executed by the at least one processor individually or collectively, may cause the electronic device to transmit, to the another electronic device, a signal according to precoding information determined using the second modified covariance information.

According to an embodiment, the instructions, when executed by the at least one processor individually or collectively, may cause the electronic device to calculate a first sum of magnitudes for covariance components of the covariance information corresponding to each of the component groups. The instructions, when executed by the at least one processor individually or collectively, may cause the electronic device to determine the first component group in which the first sum has a maximum value from among the component groups.

According to an embodiment, the instructions, when executed by the at least one processor individually or collectively, may cause the electronic device to calculate a second sum of magnitudes for covariance components of the first modified covariance information corresponding to each of the component groups. The instructions, when executed by the at least one processor individually or collectively, may cause the electronic device to determine the second component group in which the second sum has a maximum value from among the component groups.

According to an embodiment, the instructions, when executed by the at least one processor individually or collectively, may cause the electronic device to calculate a first magnitude of each of covariance components of the covariance information. The instructions, when executed by the at least one processor individually or collectively, may cause the electronic device to determine the first component group corresponding to a covariance component in which the first magnitude has a maximum value from among the covariance components of the covariance information.

According to an embodiment, the instructions, when executed by the at least one processor individually or collectively, may cause the electronic device to calculate a second magnitude of each of covariance components of the first modified covariance information. The instructions, when executed by the at least one processor individually or collectively, may cause the electronic device to determine the second component group corresponding to a covariance component in which the second magnitude has a maximum value from among the covariance components of the first modified covariance information.

According to an embodiment, the covariance components of the covariance information corresponding to the first component group may be associated with reception antenna pairs. The reception antenna pairs may be included in the reception antennas.

According to an embodiment, the reception antennas may comprise a first reception antenna, a second reception antenna, a third reception antenna, and a fourth reception antenna. The covariance components of the covariance information corresponding to the first component group may comprise a first covariance component and a second covariance component. The first covariance component may be associated with a pair of the first reception antenna and the second reception antenna. The second covariance component may be associated with a pair of the third reception antenna and the fourth reception antenna.

According to an embodiment, each of the covariance components of the covariance information corresponding to the first component group may be configured to the reference value based on Jacobi rotation. The reference value may comprise 0.

According to an embodiment, the precoding information may be applied to the reception antennas.

According to an embodiment, the first modified covariance information may comprise a matrix comprising the covariance components corresponding to the second component group. The second modified covariance information may comprise a diagonal matrix.

According to an embodiment, the second modified covariance information may comprise covariance components corresponding to a third component group different from the first component group and the second component group from among the component groups. The instructions, when executed by the at least one processor individually or collectively, may cause the electronic device to determine sequences representing an order between the covariance components of the second modified covariance information. The instructions, when executed by the at least one processor individually or collectively, may cause the electronic device to calculate a parameter associated with a noise power and effective channel information of the channel by configuring each of the covariance components of the second modified covariance information to the reference value according to each of the sequences. The instructions, when executed by the at least one processor individually or collectively, may cause the electronic device to determine a sequence in which the parameter has a maximum value from among the sequences. The instructions, when executed by the at least one processor individually or collectively, may cause the electronic device to generate third modified covariance information by configuring each of the covariance components of the second modified covariance information to the reference value according to the sequence.

According to an embodiment, the effective channel information may be calculated based on a channel estimation matrix of the channel and other precoding information of the another electronic device determined by configuring each of the covariance components of the second modified covariance information to the reference value.

According to an embodiment, the parameter may comprise a sum-rate or a signal to noise ratio (SNR).

As described above, a method performed by an electronic device may comprise generating covariance information of a channel for reception antennas, based on channel estimation using a reference signal obtained from another electronic device. The method may comprise, by configuring each of covariance components of the covariance information, corresponding to a first component group determined based on a magnitude of a covariance component from among component groups representing correlation between the reception antennas, to a reference value, generating first modified covariance information. The method may comprise, by configuring each of covariance components of the first modified covariance information, corresponding to a second component group different from the first component group from among the component groups, to the reference value, generating second modified covariance information. The method may comprise transmitting, to the another electronic device, a signal according to precoding information determined using the second modified covariance information.

According to an embodiment, the method may comprise calculating a first sum of magnitudes for covariance components of the covariance information corresponding to each of the component groups. The method may comprise determining the first component group in which the first sum has a maximum value from among the component groups.

According to an embodiment, the method may comprise calculating a second sum of magnitudes for covariance components of the first modified covariance information corresponding to each of the component groups. The method may comprise determining the second component group in which the second sum has a maximum value from among the component groups.

According to an embodiment, the method may comprise calculating a first magnitude of each of covariance components of the covariance information. The method may comprise determining the first component group corresponding to a covariance component in which the first magnitude has a maximum value from among the covariance components of the covariance information.

According to an embodiment, the method may comprise calculating a second magnitude of each of covariance components of the first modified covariance information. The method may comprise determining the second component group corresponding to a covariance component in which the second magnitude has a maximum value from among the covariance components of the first modified covariance information.

According to an embodiment, the covariance components of the covariance information corresponding to the first component group may be associated with reception antenna pairs. The reception antenna pairs may be included in the reception antennas.

As described above, a computer-readable storage medium may store one or more programs storing instructions that, when executed by at least one processor of an electronic device individually or collectively, cause the electronic device to generate covariance information of a channel for reception antennas, based on channel estimation using a reference signal obtained from another electronic device. The computer-readable storage medium may store one or more programs storing instructions that, when executed by the at least one processor individually or collectively, cause the electronic device to, by configuring each of covariance components of the covariance information, corresponding to a first component group determined based on a magnitude of covariance component from among component groups representing correlation between the reception antennas, to a reference value, generate first modified covariance information. The computer-readable storage medium may store one or more programs storing instructions that, when executed by the at least one processor individually or collectively, cause the electronic device to, by configuring each of covariance components of the first modified covariance information, corresponding to a second component group different from the first component group from among the component groups, to the reference value, generate second modified covariance information. The computer-readable storage medium may store one or more programs storing instructions that, when executed by the at least one processor individually or collectively, cause the electronic device to transmit, to the another electronic device, a signal according to precoding information determined using the second modified covariance information.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. An electronic device comprising:
at least one processor comprising processing circuitry; and
memory, including one or more storage mediums, storing instructions,
wherein the instructions, when executed by the at least one processor individually or collectively, cause the electronic device to:
generate covariance information of a channel for reception antennas, based on channel estimation using a reference signal obtained from another electronic device,
by configuring each of covariance components of the covariance information, corresponding to a first component group determined based on a magnitude of a covariance component from among component groups representing correlation between the reception antennas, to a reference value, generate first modified covariance information,
by configuring each of covariance components of the first modified covariance information, corresponding to a second component group different from the first component group from among the component groups, to the reference value, generate second modified covariance information, and
transmit, to the another electronic device, a signal according to precoding information determined using the second modified covariance information.

2. The electronic device of claim 1,
wherein the instructions, when executed by the at least one processor individually or collectively, cause the electronic device to:
calculate a first sum of magnitudes for covariance components of the covariance information corresponding to each of the component groups, and
determine the first component group in which the first sum has a maximum value from among the component groups.

3. The electronic device of claim 2,
wherein the instructions, when executed by the at least one processor individually or collectively, cause the electronic device to:
calculate a second sum of magnitudes for covariance components of the first modified covariance information corresponding to each of the component groups, and
determine the second component group in which the second sum has a maximum value from among the component groups.

4. The electronic device of claim 1,
wherein the instructions, when executed by the at least one processor individually or collectively, cause the electronic device to:
calculate a first magnitude of each of covariance components of the covariance information, and
determine the first component group corresponding to a covariance component in which the first magnitude has a maximum value from among the covariance components of the covariance information.

5. The electronic device of claim 4,
wherein the instructions, when executed by the at least one processor individually or collectively, cause the electronic device to:
calculate a second magnitude of each of covariance components of the first modified covariance information, and
determine the second component group corresponding to a covariance component in which the second magnitude has a maximum value from among the covariance components of the first modified covariance information.

6. The electronic device of claim 1,
wherein the covariance components of the covariance information corresponding to the first component group are associated with reception antenna pairs, and
wherein the reception antenna pairs are included in the reception antennas.

7. The electronic device of claim 6,
wherein the reception antennas comprise a first reception antenna, a second reception antenna, a third reception antenna, and a fourth reception antenna,
wherein the covariance components of the covariance information corresponding to the first component group comprise a first covariance component and a second covariance component,
wherein the first covariance component is associated with a reception antenna pair of the first reception antenna and the second reception antenna, and
wherein the second covariance component is associated with a reception antenna pair of the third reception antenna and the fourth reception antenna.

8. The electronic device of claim 1,
wherein each of the covariance components of the covariance information corresponding to the first component group is configured to the reference value based on Jacobi rotation, and
wherein the reference value comprises 0.

9. The electronic device of claim 1,
wherein the precoding information is applied to the reception antennas.

10. The electronic device of claim 1,
wherein the first modified covariance information comprises a matrix comprising the covariance components corresponding to the second component group, and
wherein the second modified covariance information comprises a diagonal matrix.

11. The electronic device of claim 1,
wherein the second modified covariance information comprises covariance components corresponding to a third component group different from the first component group and the second component group from among the component groups,
wherein the instructions, when executed by the at least one processor individually or collectively, cause the electronic device to:
determine sequences representing an order between the covariance components of the second modified covariance information,
calculate a parameter associated with a noise power and effective channel information of the channel by configuring each of the covariance components of the second modified covariance information to the reference value according to each of the sequences,
determine a sequence in which the parameter has a maximum value from among the sequences, and
generate third modified covariance information by configuring each of the covariance components of the second modified covariance information to the reference value according to the sequence.

12. The electronic device of claim 11,
wherein the effective channel information is calculated based on a channel estimation matrix of the channel and other precoding information of the another electronic device determined by configuring each of the covariance components of the second modified covariance information to the reference value.

13. The electronic device of claim 11,
wherein the parameter comprises a sum-rate or a signal to noise ratio (SNR).

14. A method performed by an electronic device, the method comprising:
generating covariance information of a channel for reception antennas, based on channel estimation using a reference signal obtained from another electronic device,
by configuring each of covariance components of the covariance information, corresponding to a first component group determined based on a magnitude of a covariance component from among component groups representing correlation between the reception antennas, to a reference value, generating first modified covariance information,
by configuring each of covariance components of the first modified covariance information, corresponding to a second component group different from the first component group from among the component groups, to the reference value, generating second modified covariance information, and
transmitting, to the another electronic device, a signal according to precoding information determined using the second modified covariance information.

15. A computer-readable storage medium storing one or more programs storing instructions that, when individually or collectively executed by at least one processor of an electronic device, cause the electronic device to:
generate covariance information of a channel for reception antennas, based on channel estimation using a reference signal obtained from another electronic device,
by configuring each of covariance components of the covariance information, corresponding to a first component group determined based on a magnitude of covariance component from among component groups representing correlation between the reception antennas, to a reference value, generate a first modified covariance information,
by configuring each of covariance components of the first modified covariance information, corresponding to a second component group different from the first component group from among the component groups, to the reference value, generate a second modified covariance information, and
transmit, to the another electronic device, a signal according to precoding information determined using the second modified covariance information.
